# EUROPEAN PATENT SPECIFICATION

(11) **EP 4 140 374 B1**
(45) Date of publication and mention of the grant of the patent: **01.07.2026**
(21) Application number: 21192758.7
(22) Date of filing: 24.08.2021
(51) Int. Cl.: A47J 43/07, F16D 1/10, A47J 43/044

(54) **KITCHEN APPLIANCE WITH CLUTCH COMPONENT**
KÜCHENGERÄT MIT KUPPLUNGSKOMPONENTE
APPAREIL DE CUISINE COMPORTANT LE COMPOSANT D'EMBRAYAGE

(43) Date of publication of application: 01.03.2023
(73) Proprietor: BSH Hausgeräte GmbH, 81739 München (DE)
(72) Inventor: Alberti, Kilian, 80639 München (DE); Apat, Rok, 3320 Velenje (SI); Atelsek, Darko, 3331 Nazarje (SI); Zupanc, Anze, 2380 Slovenj Gradec (SI)

(56) References cited:
- EP-A1- 2 193 734
- WO-A1-2014/144814
- WO-A1-2021/045802
- DE-A1- 2 705 063
- US-A1- 2015 374 175
- US-B1- 9 687 111

## Description

The present invention concerns a kitchen appliance including a clutch component forming an orifice configured to receive a clutch counter component for facilitating torque transfer.

Kitchen appliances often comprise at least one attachment with a rotatable tool designated to treat food, such as by beating, crushing or mixing one or more ingredients. For instance, the tool may comprise at least one knife and/or at least one agitator.

The attachment typically is connected or connectable with a drive unit of the kitchen appliance via a clutch comprising a first component connected or connectable with the drive unit, and a matching second component comprised by the attachment. By combining the first and the second component of the clutch, a user enables the drive unit to drive a rotation of the attachment. Kitchen appliances according to the preamble of claim 1 are for example known from WO 2021/045802 A1 and EP 2 193 734 A1.

The present invention targets at facilitating the construction of an improved kitchen appliance comprising a rotatable tool, and providing such improved kitchen appliance.

These objects are achieved by a kitchen appliance as defined in independent claim 1. Preferred embodiments are depicted in the dependent claims 2-10.

A clutch component is a construction part of a kitchen appliance according to the present invention.

The clutch component has an orifice configured to receive a (matching) clutch counter component, so as to facilitate torque transfer (from the clutch component to the clutch counter component and/or vice versa). Therein, the orifice is at least partially encompassed by one or more ceramic material/s (comprised by the clutch component).

The orifice of a clutch component according to the present invention thus is at least partially or entirely framed by the ceramic material(s). Therewith, a high wear resistance of the clutch component can be achieved. As a consequence, occurrence of abrasion is minimised even if the clutch component is frequently employed for insertion and removal of one or more clutch counter component/s (so as to mount and dismount, respectively, at last one attachment), and/or for transferring torque in utilisation. Moreover, ceramic material may withstand high temperatures, non-oil environments and/or dry conditions.

As a consequence, the durability of a kitchen appliance comprising the clutch component is increased. Furthermore, ceramic material provides for electric insulation, which thus improves safety of the respective kitchen appliance.

A clutch is a construction part of or for a kitchen appliance according to a preferred embodiment of the present invention.

The clutch comprises a clutch component according to an embodiment of the present invention, and a clutch counter component matching to the clutch component, i.e., configured to be at least partially inserted into the orifice of the clutch component so as to take over or to pass on a rotation (and therewith to transfer torque).

According to a preferred embodiment, the kitchen appliance comprises a drive module.

The drive module comprises a clutch component (further referred to herein also as "drive module's clutch component) according to an embodiment of the present invention, and a drive unit with a drive shaft. The drive shaft is (preferably permanently) connected or connectable to the clutch component and configured to be rotated, about a longitudinal axis of the drive shaft, by the drive unit. In particular, an end of the drive shaft may be fixed, such as by means of a press-fit, in a hole the clutch component may form.

By inserting a matching clutch counter component, the drive module thus is adapted to drive a rotation of a tool (such as an agitator or a knife assembly) connected to the clutch counter component.

The drive unit may be operable mechanically and/or electrically. In particular, the drive unit may comprise at least on electrical motor. To power the drive unit, the drive module may comprise at least one eletric battery, and/or it may be connectable to a current source.

The drive module may be configured as a base of or for the kitchen appliance, which may further comprise a jug or other receptacle to be placed in a designated position on the base.

Additionally or alternatively, the drive module may preferably be configured as a hand-held assembly, such as a hand-held drive module of/for a stick blender and/or of/for a hand mixer.

An attachment may form part of the kitchen appliance.

The attachment comprises a clutch component (further referred to herein also as "attachment's clutch component) according to an embodiment of the present invention, and a tool (for treating food), which is (permanently or detachably) connected to the clutch component. In particular, the tool may be mounted to an attachment shaft which may be fixed to the clutch component, such as by press-fit of an end of the attachment shaft in a hole the clutch component may form.

Accordingly, the clutch component of such attachment is designated to take over a rotation of a clutch counter component when this is inserted in the orifice of the clutch component and connected to a drive unit.

In a preferred embodiment the kitchen appliance comprises a drive module with a drive unit, and one or more attachment/s to be combined with the drive module. Therein, the drive module and/or at least one of the one or more attachment/s comprise(s) a (respective) clutch component according to an embodiment of the present invention.

In particular, the drive module of a kitchen machine according to the present invention may be an embodiment of a drive module according to the present invention. In this case, at least one of the one or more attachment/s preferably comprises clutch counter component to be inserted into the orifice of the drive module's clutch component.

Additionally or alternatively, at least one of the one or more attachment/s of a kitchen machine according to the present invention may be an embodiment of an attachment according to the present invention. In this case, the drive module preferably comprises a clutch counter component to be inserted into the orifice of the (respective) attachment's clutch component.

According to advantageous embodiments of the present invention, the orifice of the clutch component is configured to receive the clutch counter component in an insertion direction which may preferably coincide with a designated axis of rotation of the clutch component.

The clutch component may comprise two, three, four, five, six or more protrusions projecting towards a centre axis of the orifice, the protrusions configured to engage with a respective surface of the clutch counter component for facilitating the torque transfer. Such protrusions are preferably at least partially or entirely made of the ceramic material(s). They may be uniformly distributed round the centre axis of the orifice. In particular, the orifice (or even the clutch component) may preferably be shaped rotational symmetric about its centre axis, such as with respect to an angle of 180°, 120°, 90°, 72° or 45°.

At least one of the ceramic material/s encompassing the orifice is preferably food compatible. Therefore, even is a small amount of particles is separated from the clutch component due to wear out, these particles do not deteriorate a respective food when falling into it.

Advantageously, in radial direction (with respect to a designated axis of rotation of the cutch component), the ceramic material/s encompassing the orifice may have a mean thickness (in particular, material thickness) of at least 0.5mm, at least 1mm, at least 1.5mm or at least 2mm. Thereby, a particularly advantageous hardness and wear resistance of the clutch component can be achieved.

In particular, the ceramic material/s may comprise one or more steatite/s, e.g., C221. Such materials each provide for a particularly good resistance abrasion and food compatibility.

The clutch component may be entirely made of one or more ceramic material/s. In this case, it may be (preferably durably) connectable or connected with a shaft (e.g., with a drive shaft of a drive module, or with an attachment shaft connected or connectable with a respective tool) with an intermediate material in-between, i.e., in a region of contact of the clutch component and the shaft. Thereby, the ceramic material/s can be prevented to crack when being connected with the shaft. The intermediate material may be an antifriction material, in particular a lubricant, for instance.

According to advantageous embodiments, the clutch component according to the present invention comprises a coupling member and a connection portion, which differ from each other in their respective material(s) and/or material composition. Therein, the coupling member at least partially delimits the orifice (and thus is configured to be coupled with the clutch counter component), and the connection portion at least partially encompasses the coupling member and is configured to connect the coupling member with a shaft (such as a drive shaft or an attachment shaft). In particular, the connection portion may preferably be fixed or configured to be fixed (preferably permanently) to said shaft, such as by a press-fit of a portion of the shaft within a hole the connection portion may have.

Such embodiments provide the advantage that the coupling member may be made of one or more material(s) particularly appropriate to ensure good durability when a respective clutch counter component is frequently inserted in and removed from the orifice in respective coupling and uncoupling procedures, and/or when the clutch comprising the clutch component and the clutch counter component is frequently used for rotating a respective attachment. By contrast, the connection portion may be made of one or more (different) material(s) facilitating a safe (preferably permanent) fixation to a shaft.

Preferably, the coupling member and the connection portion are firmly joined (thus unmovable relative to each other), such as by means of adhesive bonding. In particular, the connection portion may preferably be built around the coupling member by way of injection moulding.

The coupling member may advantageously be pipe-shaped. In such case, the connection portion may form a cavity configured to receive a portion of the clutch counter component reaching through the coupling member. Such embodiments facilitate a particularly steady mount of an attachment's shaft comprising the clutch counter component while allowing a saving of ceramic material and a convenient production of the clutch component.

In embodiments where the clutch component further comprises protrusions projecting towards a centre of the orifice and configured to engage with a surface of the clutch counter component as mentioned above, one or more of the protrusions preferably are partially or entirely formed by the coupling member.

A mean thickness (in particular, a mean material thickness) of the coupling member in radial direction (with respect to the designated axis of rotation of the cutch component), may advantageously be at least 0.5mm, at least 1mm, at least 1.5mm or at least 2mm.

According to advantageous embodiments of a clutch component comprising a coupling member and a connection portion, the coupling member is at least partially made of the one or more ceramic materials encompassing the orifice. In particular, the coupling member may be monolithic and/or of a homogeneous material.

Additionally or alternatively, the connection portion may preferably be at least partially made of one or more plastic material/s. Thereby, when integrated in the kitchen appliance, further to the ceramic material/s encompassing the orifice, also the connection portion may serve as an electrical isolator between a tool and a drive unit each connected to the clutch component. As a consequence, the safety of the kitchen appliance is improved.

In such embodiments, the plastic material/s in particular may be one or more of polypropylene, polyamide (e.g., PA, PA6, PA66), PEEK, and/or POM.

According to advantageous embodiments of the present invention, the kitchen appliance may in particular comprise (or even be) a mixer, a chopper, a stand blender and/or a hand blender.

In the following, preferred embodiments of the present invention are explained with respect to the accompanying drawings. As is to be understood, the various elements and components are depicted as examples only, may be facultative and/or combined in a manner different than that depicted. Reference signs for related elements are used comprehensively and not defined again for each figure.

In the context of this patent application, the term or word orifice shall be construed to have a broader meaning including, e.g. a recess.

Shown is schematically in
- Fig. 1:: an exemplary embodiment of a clutch component according to the present invention;
- Fig. 2:: a portion of a drive module according to an exemplary embodiment of the present invention;
- Fig. 3:: a portion of a drive module according to an exemplary embodiment of the present invention and further comprising a housing; and
- Fig. 4:: a cross section of a portion of a kitchen appliance according to an embodiment of the present invention.

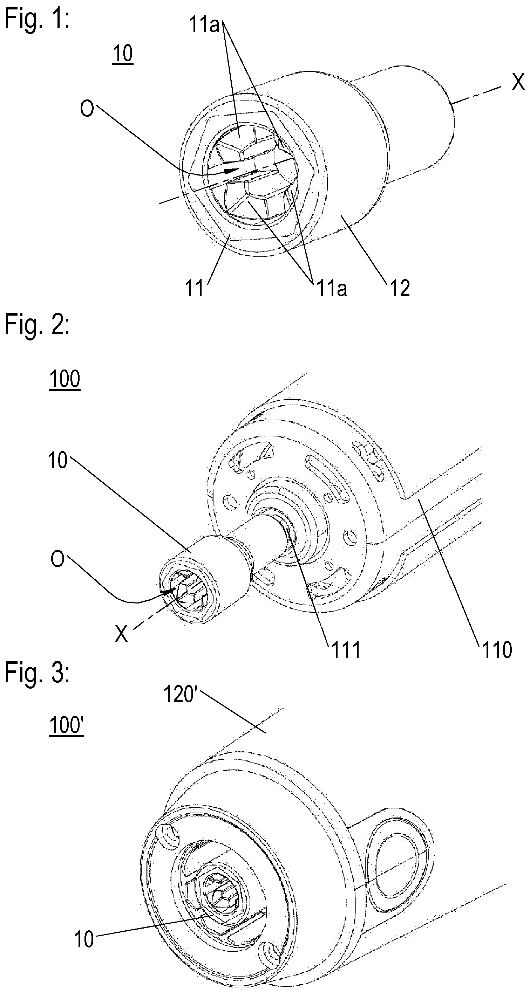

Figure 1 shows a clutch component 10 according to an exemplary embodiment of the present invention in a perspective view. The clutch component 10 forms an orifice O configured to receive a clutch counter component (not shown in Figure 1) for facilitating transfer of torque about a designated axis X of rotation, which axis X coincides with a centre axis of the orifice O.

The orifice O is encompassed by one or more ceramic materials (such as a steatite, in particular C221, for instance). In the embodiment depicted in Figure 1, the orifice O is formed in (by) a coupling member 11 comprised by the clutch component 10, which coupling member 11 is made of one or more ceramic material/s and is encompassed by a connection portion 12 of a different material or material composition than the coupling member 11. With respect to the designated axis X of rotation of the clutch component, the connection portion 12 radially surrounds the coupling member 11. The coupling member 11 and the connection portion 12 are firmly joined, thus unmovable relative to each other.

In particular, the connection portion 12 may be made of one or more plastic material/s (such as polypropylene, polyamide (e.g., PA, PA6, PA66), PEEK, and/or POM, for instance). Advantageously, the connection portion 12 is formed by way of injection moulding around the coupling member 11.

The coupling member 11 of the clutch component 10 shown in Figure 1 comprises four protrusions 11a projecting towards the centre axis of the orifice O and, therewith, towards the designated axis X of rotation. The protrusions are configured to engage with a surface profile of the clutch counter component (not shown) for facilitating torque transfer. In the embodiment depicted, the protrusions 11a are uniformly distributed round the centre axis of the orifice O. Accordingly, the orifice O is rotational symmetric of order four (thus, rotationally symmetric with respect to an angle of 90°) about its centre axis (and therewith, about the designated axis X of rotation).

In Figure 2, a portion of a drive module 100 according to an exemplary embodiment of the present invention is shown in perspective view. The drive module 100 comprises a clutch component 10 (as shown in Figure 1 and described above) and a drive unit 110 comprising a drive shaft 111, which is (preferably permanently) fixed, in axial direction (with respect to the designated axis X of rotation) opposite to the orifice O, to the clutch component 10.

The drive module 100' partially shown in Figure 3 further comprises a drive module housing 120' enclosing the drive unit (which accordingly is not visible in Figure 3). The drive module housing 120' may comprise a grip surface (not shown in Figure 3). Indeed, the drive modules shown in Figures 2 and 3 are configured as a hand-held device, which in this case is a drive module of a stick blender.

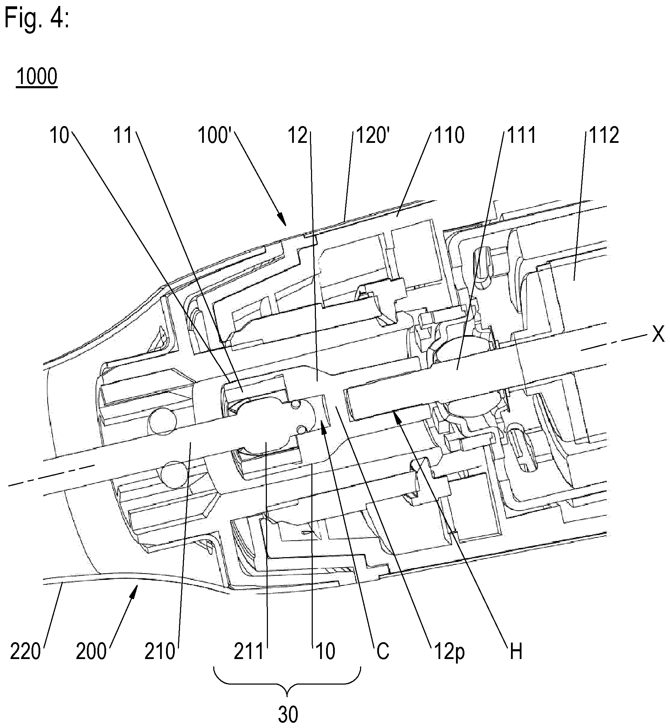

Figure 4 provides a cross section of a portion of a stick blender being an exemplary embodiment of a kitchen appliance 1000 according to the present invention. The kitchen appliance 1000 comprises a drive module 100' as described above, and an attachment 200 which in the situation depicted is attached to the drive module 100'.

In the attached state shown in Figure 4, an attachment housing 220 is combined to the drive module housing 120', and a clutch counter component 211 at an end region (with respect to a longitudinal axis) of an attachment shaft 210 (which preferably is connected to a tool not visible in Figure 4 due to the image section) is inserted into the orifice of the clutch component 10.

As can be seen in Figure 4, such connected the clutch counter component 211 penetrates the coupling member 11 which in this case is pipe-shaped, and a portion of the clutch counter component 211 reaches through the coupling member 11 and into a cavity C formed in the connection portion 12 of the clutch component 10. Thereby, a particularly solid coupling can be achieved.

The clutch component 10 is fixed to the drive shaft 111 protruding from an electric motor 112 comprised by the drive unit 110. Therein, a portion of the drive shaft 111 is inserted into a hole H formed, in the connection portion 12, axially opposite to the orifice O (with respect to the designated axis X of rotation). In particular, said portion of the drive shaft 111 may preferably be press-fitted in the hole H. In the embodiment shown, the hole H and the cavity C are separated from each other by a partition wall 12p formed by the connection portion 12.

Together, the clutch component 10 and the clutch component 211 build a clutch 30 according to an embodiment of the present invention.

Disclosed is a clutch component 10 of or for a kitchen appliance 1000. The clutch component forms an orifice O configured to receive a clutch counter component 211 for facilitating torque transfer. Therein, the orifice O is at least partially encompassed by one or more ceramic material/s.

Further disclosed are a clutch 30, a drive module 100, 100' and an attachment each of or for a kitchen appliance and comprising a clutch component 10. Moreover, a kitchen appliance 1000 comprising a drive module 100, 100' and an attachment 200 is disclosed.

### Reference signs

- 10: clutch component
- 11: coupling member
- 11a: protrusion
- 12: connection portion
- 12p: partition wall

- 30: clutch

- 100, 100': drive module
- 110: drive unit
- 111: drive shaft
- 112: electric motor
- 120': drive module housing

- 200: attachment
- 210: attachment shaft
- 211: clutch counter component
- 220: attachment housing

- 1000: kitchen appliance

- C: cavity
- H: hole
- O: orifice
- X: designated axis of rotation

## Claims

1. Kitchen appliance comprising a clutch component (10), the clutch component forming an orifice (O) configured as a recess and being further configured to receive a clutch counter component (211) connected to a food processing tool for facilitating torque transfer, **characterised in that** the orifice (O) is at least partially encompassed by one or more ceramic material/s.

2. Kitchen appliance according to claim 1, comprising the clutch component which comprises a coupling member (11) at least partially delimiting said orifice (O), and a connection portion (12) at least partially encompassing the coupling member (11) and configured to connect the coupling member (11) with a shaft (111), wherein the coupling member (11) and the connection portion (12) are different with respect to their respective material/s and/or material composition.

3. Kitchen appliance according to claim 2, comprising the clutch component, wherein the coupling member (11) is at least partially made of the one or more ceramic material/s.

4. Kitchen appliance according to one of claims 2 or 3, comprising the clutch component, wherein the connection portion (12) is at least partially made of one or more plastic material/s.

5. Kitchen appliance according to one of the preceding claims, comprising a clutch (30), the clutch comprising the clutch component (10) and a clutch counter component (211) configured to be at least partially inserted into the orifice (O) of the clutch component (10) so as to take over a rotation thereof.

6. Kitchen appliance according to one of claims 1 to 4, comprising a drive module (100, 100'), the drive module comprising the clutch component (10), and a drive unit (110) with a drive shaft (111) fixed to the clutch component (10) and configured to be rotated, about a longitudinal axis of the drive shaft (111), by the drive unit (110).

7. Kitchen appliance according to claim 6, comprising the drive module (100, 100'), wherein the drive module is configured as a hand-held assembly.

8. Kitchen appliance according to one of claims 1 to 4, comprising an attachment, the attachment comprising the clutch component (10) and a tool connected or connectable with the clutch component (10).

9. Kitchen appliance (1000) according to one of claims 1 to 4, comprising a drive module (100, 100') with a drive unit (110), and one or more attachment/s (200) adapted to be combined with the drive module (100, 100'), wherein the drive module (100, 100') and/or at least one of the attachment/s comprise/s the clutch component (10).

10. Kitchen appliance (1000) according to claim 9, which is or comprises a mixer, a stand blender and/or a hand blender.

## Patentansprüche

1. Küchengerät mit einer Kupplungskomponente (10), die eine Öffnung (O) bildet, welche als Vertiefung und ferner so ausgelegt ist, dass sie eine Kupplungsgegenkomponente (211) aufnehmen kann, welche zum Ermöglichen einer Drehmomentübertragung mit einem Lebensmittelverarbeitungswerkzeug verbunden ist, **dadurch gekennzeichnet, dass** die Öffnung (O) zumindest teilweise von einem oder mehreren Keramikmaterialien umgeben ist.

2. Küchengerät nach Anspruch 1 mit der Kupplungskomponente, welche ein Koppelelement (11), das die Öffnung (O) zumindest teilweise begrenzt, und einen Verbindungsteil (12) umfasst, der das Koppelelement (11) zumindest teilweise umgibt und so ausgelegt ist, dass er das Koppelelement (11) mit einer Welle (111) verbindet, wobei sich das Koppelelement (11) und der Verbindungsteil (12) in Bezug auf ihr jeweiliges Material und/oder ihre Materialzusammensetzung unterscheiden.

3. Küchengerät nach Anspruch 2 mit der Kupplungskomponente, wobei das Koppelelement (11) zumindest teilweise aus dem einen oder den mehreren Keramikmaterialien hergestellt ist.

4. Küchengerät nach Anspruch 2 oder 3 mit der Kupplungskomponente , wobei der Verbindungsteil (12) zumindest teilweise aus einem oder mehreren Kunststoffmaterialien hergestellt ist.

5. Küchengerät nach einem der vorhergehenden Ansprüche mit einer Kupplung (30), die die Kupplungskomponente (10) und eine Kupplungsgegenkomponente (211) umfasst, welche so ausgelegt ist, dass sie sich zumindest teilweise in die Öffnung (O) der Kupplungskomponente (10) stecken lässt und so ein Drehen davon übernimmt.

6. Küchengerät nach einem der Ansprüche 1 bis 4 mit einem Antriebsmodul (100, 100'), das die Kupplungskomponente (10) umfasst, und einer Antriebseinheit (110) mit einer Antriebswelle (111), die an der Kupplungskomponente (10) fixiert und so ausgelegt ist, dass sie von der Antriebseinheit (110) um ihre Längsachse gedreht werden kann.

7. Küchengerät nach Anspruch 6 mit dem Antriebsmodul (100, 100'), wobei das Antriebsmodul als Hand-Baugruppe ausgelegt ist.

8. Küchengerät nach einem der Ansprüche 1 bis 4 mit einem Zubehörteil, das die Kupplungskomponente (10) und ein mit der Kupplungskomponente (10) verbundenes oder verbindbares Werkzeug umfasst.

9. Küchengerät (1000) nach einem der Ansprüche 1 bis 4 mit einem Antriebsmodul (100, 100') mit einer Antriebseinheit (110) und einem oder mehreren Zubehörteilen (200), die mit dem Antriebsmodul (100, 100') zusammensetzbar sind, wobei das Antriebsmodul (100, 100') und/oder mindestens eines der Zubehörteile die Kupplungskomponente (10) umfasst.

10. Küchengerät (1000) nach Anspruch 9, bei dem es sich um einen Mixer, einen Standmixer und/oder einen Pürierstab handelt oder das diesen umfasst.

## Revendications

1. Appareil de cuisine comprenant une pièce d'accouplement (10), la pièce d'accouplement formant un orifice (O) configuré sous la forme d'une cavité et étant configuré en outre pour recevoir une pièce d'accouplement complémentaire (211) reliée à un outil de traitement d'aliments afin de permettre un transfert de couple, **caractérisé en ce que** l'orifice (O) est au moins partiellement entouré par un ou plusieurs matériaux céramiques.

2. Appareil de cuisine selon la revendication 1, comprenant la pièce d'accouplement qui comprend un élément d'accouplement (11) délimitant au moins partiellement ledit orifice (O), et une partie de liaison (12) entourant au moins partiellement l'élément d'accouplement (11) et configurée pour relier l'élément d'accouplement (11) à un arbre (111), l'élément d'accouplement (11) et la partie de liaison (12) différant par leur(s) matériau(x) respectif(s) et/ou leur composition de matériau respective.

3. Appareil de cuisine selon la revendication 2, comprenant la pièce d'accouplement, dans lequel l'élément d'accouplement (11) est constitué au moins partiellement de l'un ou plusieurs matériau(x) céramique(s).

4. Appareil de cuisine selon la revendication 2 ou 3, comprenant la pièce d'accouplement, dans lequel la partie de liaison (12) est constituée au moins partiellement d'un ou plusieurs matériau(x) plastique(s).

5. Appareil de cuisine selon l'une des revendications précédentes, comprenant un embrayage (30), l'embrayage comprenant la pièce d'accouplement (10) et une pièce d'accouplement complémentaire (211) configurée pour être insérée au moins partiellement dans l'orifice (O) de la pièce d'accouplement (10) de façon à reprendre la rotation de celle-ci.

6. Appareil de cuisine selon l'une des revendications 1 à 4, comprenant un module d'entraînement (100, 100'), le module d'entraînement comprenant la pièce d'accouplement (10), et une unité d'entraînement (110) comprenant un arbre d'entraînement (111) fixé à la pièce d'accouplement (10) et configuré pour être mis en rotation autour de l'axe longitudinal de l'arbre d'entraînement (111) par l'unité d'entraînement (110).

7. Appareil de cuisine selon la revendication 6, comprenant le module d'entraînement (100, 100'), dans lequel le module d'entraînement est configuré sous forme d'un ensemble portatif.

8. Appareil de cuisine selon l'une des revendications 1 à 4, comprenant un accessoire, l'accessoire comprenant la pièce d'accouplement (10) et un outil connecté ou apte à être connecté à la pièce d'accouplement (10).

9. Appareil de cuisine (1000) selon l'une des revendications 1 à 4, comprenant un module d'entraînement (100, 100') comportant une unité d'entraînement (110), et un ou plusieurs accessoires (200) adaptés pour être montés sur le module d'entraînement (100, 100'), dans lequel le module d'entraînement (100, 100') et/ou au moins un des accessoires comprend la pièce d'accouplement (10).

10. Appareil de cuisine (1000) selon la revendication 9, qui est ou comprend un batteur, un blender sur socle et/ou un mixeur.
